# EUROPÄISCHE PATENTSCHRIFT

(11) **EP 3 881 381 B1**
(45) Veröffentlichungstag und Bekanntmachung des Hinweises auf die Patenterteilung: **04.01.2023**
(21) Anmeldenummer: 19806111.1
(22) Anmeldetag: 11.11.2019
(51) Int. Cl.: H01M 8/04225, H01M 8/04302, H01M 8/04537, H01M 8/04858

(54) **VERFAHREN ZUM ANFAHREN EINER KREISLAUFBRENNSTOFFZELLE**
METHOD FOR STARTING UP A CLOSED-LOOP FUEL CELL
PROCÉDÉ DE DÉMARRAGE D'UNE PILE À COMBUSTIBLE DE CIRCUIT

(30) Priorität: 14.11.2018 DE 102018219434
(43) Veröffentlichungstag der Anmeldung: 22.09.2021
(73) Patentinhaber: thyssenkrupp Marine Systems GmbH, 24143 Kiel (DE); thyssenkrupp AG, 45143 Essen (DE)
(72) Erfinder: POMMER, Hans, 24360 Barkelsby (DE)
(74) Vertreter: thyssenkrupp Intellectual Property GmbH
(86) Internationale Anmeldenummer: PCT/EP2019/080853
(87) Internationale Veröffentlichungsnummer: WO 2020/099311

(56) Entgegenhaltungen:
- DE-A1-102009 001 630
- DE-A1-102015 014 939

## Beschreibung

Die Erfindung betrifft ein Verfahren zum Anfahren einer Kreislaufbrennstoffzelle.

Ist eine Brennstoffzelle nicht in Benutzung, so wird vorher die Sauerstoffseite üblicherweise mit Inertgas gespült, damit kein Sauerstoff dauerhaft in Kontakt mit Elektrode und Membran ist, um eine Beschädigung zu vermeiden. Auf der Wasserstoffseite verbleibt regelmäßig Wasserstoff. Hierdurch kann mit der Zeit Wasserstoff auf die Sauerstoffseite gelangen. Würde man nun Sauerstoff wieder in die Sauerstoffseite einbringen, kann ein zündfähiges Gasgemisch entstehen.

Um dieses Problem zu lösen wird üblicherweise die Sauerstoffseite mit Inertgas gespült und dabei das Gasgemisch an die Umgebung abgegeben. Dieses ist jedoch in geschlossenen Umgebungen, beispielsweise in einem Unterseeboot, kritisch, da hier kein Wasserstoff an die Umgebung abgegeben werden kann. Um den Wasserstoff abzubauen, kann das Spülgas durch einen entsprechenden Konverter geleitet werden, der eine kontrollierte Oxidation ermöglicht. Ein solcher Konverter ist in Unterseebooten mit einem Bleiakkumulator vorhanden. In Unterseebooten, welche jedoch einen Lithium-Sekundärelement zur Energiespeicherung verwenden, ist dieser Konverter nicht mehr nötig.

Aufgabe der Erfindung ist es, beim Anfahren einer Brennstoffzelle die Abgabe von Wasserstoff an die Umgebung zu vermeiden und gleichzeitig sicherzustellen, dass es zu keinem zündfähigen Gemisch kommt.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren zum Anfahren einer Kreislaufbrennstoffzelle weist die folgenden Schritte auf:
a) Auswählen einer Kreislaufbrennstoffzelle, wobei die Kreislaufbrennstoffzelle im Ruhezustand ist,
c) Anlegen einer Spannung zwischen der Wasserstoffseite und der Sauerstoffseite des Stacks, wobei die Elektrode der Sauerstoffseite positiv polarisiert ist,
b) Messen des fließenden Stromes zwischen der Elektrode der Sauerstoffseite und der Elektrode der Wasserstoffseite,
d) Beenden des Anlegens einer Spannung zwischen der Wasserstoffseite und der Sauerstoffseite,
f) Zuführen von Sauerstoff zu Sauerstoffseite.

Insbesondere kann das Beenden des Anlegens einer Spannung zwischen der Wasserstoffseite und der Sauerstoffseite durch Trennen von der externen Spannungsquelle durchgeführt werden.

Durch das externe Aufprägen einer Spannung läuft die anodische Oxidation von Wasserstoff auf der Sauerstoffseite ab, sodass die Protonen zurück durch die Membran zurück zur Wasserstoffseite geführt werden können. Hierdurch wird der Wasserstoff auf der Sauerstoffseite zur Anode transportiert.

In einer weiteren Ausführungsform der Erfindung liegt im Ruhezustand der Kreislaufbrennstoffzelle auf der Sauerstoffseite Inertgas mit weniger als 1 Vol.-% Sauerstoff, bevorzugt von weniger als 10 ppm Sauerstoff, vor.

In einer weiteren Ausführungsform der Erfindung wird in Schritt b) eine Spannung zwischen 0,1 V und 1 V, vorzugsweise zwischen 0,2 V und 0,8 V, besonders bevorzugt zwischen 0,25 V und 0,4 V angelegt.

In einer weiteren Ausführungsform der Erfindung wird in den Schritten b) bis d) die Wasserstoffseite kontinuierlich mit Wasserstoff oder einem Wasserstoff-Inertgas-Gemisch durchspült wird. Hierdurch wird sichergestellt, dass die Anode mit Wasserstoff versorgt ist und der Kathodenkreislauf betrieben wird.

In einer weiteren Ausführungsform der Erfindung weist das Verfahren zwischen Schritt d) und Schritt f) den folgenden Schritt auf:
e) Reduktion des Inertpartialdrucks der Sauerstoffseite auf den Inertpartialdruck im Regelbetrieb.

Im Ruhezustand ist der Druck auf beiden Seiten der Brennstoffzelle vorzugsweise gleich. Da auf der Sauerstoffseite nur Inertgas vorhanden ist, ist der Partialdruch des Inertgases im Ruhezustand somit höher als im Betriebszustand. Nach dem erfolgten Abbau des Wasserstoffs auf der Sauerstoffseite wird daher vorteilhaft zunächst der Druck abgesenkt, bevor Sauerstoff zugegeben wird.

In einer weiteren Ausführungsform der Erfindung wird in Schritt b) der fließende Strom in Abhängigkeit von der Zeit gemessen wird. Bevorzugt wird Schritt d) nach Unterschreitung eines Schwellstromes in Schritt b) durchgeführt wird. Je geringer die Wasserstoffkonzentration auf der Sauerstoffseite ist, umso geringer wird auch der resultierende fließende Strom ausfallen. Der Grenzstrom entspricht somit einer Grenzkonzentration. Somit wird die Zellspannung abgebaut.

In einem weiteren Aspekt betrifft die Erfindung ein Verfahren zur Detektion eines Defekts an einer Kreislaufbrennstoffzelle. Bei dem Verfahren wird die Zeitabhängigkeit des in Schritt b) gemessenen Stromes ausgewertet und der Grenzstrom ermittelt, welchem sich der gemessene Strom annähert. Anhand des Grenzstromes werden zwei Zellenzustände unterschieden:
A) Der Grenzstrom unterschreitet einen Wert von höchstens 10 µA, bevorzugt von 1 µA, besonders bevorzugt von 0,1 µA, und die Kreislaufbrennstoffzelle wird als intakt bewertet und das Verfahren zum Anfahren einer Kreislaufbrennstoffzelle fortgeführt;
B) Der Grenzstrom überschreitet einen Wert von 10 µA, die Kreislaufbrennstoffzelle wird als defekt bewertet und das Verfahren zum Anfahren einer Kreislaufbrennstoffzelle beendet.

Über die Messung der einzelnen Zellspannungen, kann eine undichte Brennstoffzelle identifiziert werden, da die Spannung an einer undichten Zelle nicht vollständig abgebaut wird, da eine Menge Wasserstoff - abhängig von der Leckrate - kontinuierlich von der Anode auf die Kathode fließt.

Nachfolgend ist das erfindungsgemäße Verfahren anhand eines in der Zeichnung dargestellten Ausführungsbeispiels näher erläutert.

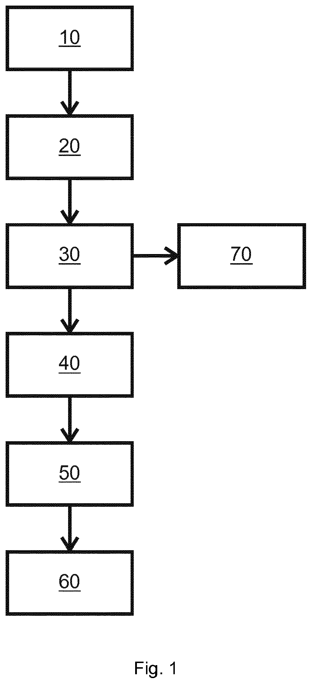

### Fig. 1 Ablaufdiagramm

In Fig. 1 ist das erfindungsgemäße Verfahren dargestellt. In einem ersten Schritt 10 wird eine Kreislaufbrennstoffzelle im Ruhezustand bereitgestellt. Auf der Sauerstoffseite befindet sich Inertgas mit einem geringen Anteil Wasserstoffe, wobei der Wasserstoff durch Diffusion durch die Membran auf die Sauerstoffseite gelangt ist.

In einem zweiten Schritt 20 wird die Anode mit Wasserstoff versorgt und die Kathode im Kreislauf betrieben, dann wird eine Spannung beispielsweise von 300 mV zwischen der Wasserstoffseite und der Sauerstoffseite angelegt, wobei die Elektrode der Sauerstoffseite positiv polarisiert ist.

In einem dritten Schritt 30 wird der fließende Strom zeitabhängig gemessen und der Grenzstrom ermittelt. Liegt der Grenzstrom praktisch bei 0, so wird das Verfahren weiter fortgesetzt. Ist der Grenzstrom gut messbar, so ist dieses ein Hinweis auf ein Leck in der Membran, die Brennstoffzelle wird als defekt klassifiziert und das Verfahren in einem Schritt 70 beendet.

In einem vierten Schritt 40 wird das Anlegen der Spannung beendet und in einem fünften Schritt 50 der Partialdruck des Inertgases reduziert.

In einem sechsten Schritt 60 wird Sauerstoff zur Sauerstoffseite zugeführt und der Regelbetrieb der Kreislaufbrennstoffzelle aufgenommen.

## Patentansprüche

1. Verfahren zum Anfahren einer Kreislaufbrennstoffzelle, wobei das Verfahren die folgenden Schritte aufweist:
a) Auswählen einer Kreislaufbrennstoffzelle, wobei die Kreislaufbrennstoffzelle im Ruhezustand ist,
b) Anlegen einer Spannung zwischen der Wasserstoffseite und der Sauerstoffseite, wobei die Elektrode der Sauerstoffseite positiv polarisiert ist,
c) Messen des fließenden Stromes zwischen der Elektrode der Sauerstoffseite und der Elektrode der Wasserstoffseite,
d) Beenden des Anlegens einer Spannung zwischen der Wasserstoffseite und der Sauerstoffseite,
f) Zuführen von Sauerstoff zu Sauerstoffseite.

2. Verfahren nach Anspruch 1, **dadurch gekennzeichnet, dass** im Ruhezustand der Kreislaufbrennstoffzelle auf der Sauerstoffseite Inertgas mit weniger als 1 Vol.-% Sauerstoff, bevorzugt von weniger als 10 ppm Sauerstoff, vorliegt.

3. Verfahren nach einem der vorstehenden Ansprüche, **dadurch gekennzeichnet, dass** in Schritt b) eine Spannung zwischen 0,1 V und 1 V, vorzugsweise zwischen 0,2 V und 0,8 V, besonders bevorzugt zwischen 0,25 V und 0,4 V angelegt wird.

4. Verfahren nach einem der vorstehenden Ansprüche, **dadurch gekennzeichnet, dass** in den Schritten b) bis d) die Wasserstoffseite kontinuierlich mit Wasserstoff oder einem Wasserstoff-Inertgas-Gemisch durchspült wird.

5. Verfahren nach einem der vorstehenden Ansprüche, **dadurch gekennzeichnet, dass** zwischen Schritt d) und Schritt f) das Verfahren den folgenden Schritt aufweist:
e) Reduktion des Inertpartialdrucks der Sauerstoffseite auf den Inertpartialdruck im Regelbetrieb.

6. Verfahren nach einem der vorstehenden Ansprüche, **dadurch gekennzeichnet, dass** in Schritt b) der fließende Strom in Abhängigkeit von der Zeit gemessen wird.

7. Verfahren nach Anspruch 6, **dadurch gekennzeichnet, dass** Schritt d) nach Unterschreitung eines Schwellstromes in Schritt b) durchgeführt wird.

8. Verfahren zur Detektion eines Defekts während der Durchführung des Verfahrens nach einem der Ansprüche 6 bis 7, **dadurch gekennzeichnet, dass** die Zeitabhängigkeit des in Schritt b) gemessenen Stromes ausgewertet wird und wobei der Grenzstrom ermittelt wird, welchem sich der gemessene Strom annähert, wobei zwei Zellenzustände unterschieden werden:
A) Der Grenzstrom unterschreitet einen Wert von höchstens 10 µA, bevorzugt von 1 µA, besonders bevorzugt von 0,1 µA, und die Kreislaufbrennstoffzelle wird als intakt bewertet und das Verfahren zum Anfahren einer Kreislaufbrennstoffzelle fortgeführt;
B) Der Grenzstrom überschreitet einen Wert von 10 µA, die Kreislaufbrennstoffzelle wird als defekt bewertet und das Verfahren zum Anfahren einer Kreislaufbrennstoffzelle beendet.

## Claims

1. Method for starting up a closed-loop fuel cell, wherein the method comprises the following steps:
a) selecting a closed-loop fuel cell, wherein the closed-loop fuel cell is in the idle state,
b) applying a voltage between the hydrogen side and the oxygen side, wherein the electrode of the oxygen side is positively polarized,
c) measuring the flowing current between the electrode of the oxygen side and the electrode of the hydrogen side,
d) stopping the application of a voltage between the hydrogen side and the oxygen side,
f) supplying oxygen to the oxygen side.

2. Method according to Claim 1, **characterized in that**, in the idle state of the closed-loop fuel cell, on the oxygen side there is inert gas with less than 1% by volume oxygen, preferably less than 10 ppm oxygen.

3. Method according to either of the preceding claims, **characterized in that**, in step b), a voltage of between 0.1 V and 1 V, preferably between 0.2 V and 0.8 V, particularly preferably between 0.25 V and 0.4 V, is applied.

4. Method according to one of the preceding claims, **characterized in that**, in steps b) to d), the hydrogen side is continuously flushed through with hydrogen or a mixture of hydrogen and inert gas.

5. Method according to one of the preceding claims, **characterized in that**, between step d) and step f), the method comprises the following step:
e) reducing the inert partial pressure of the oxygen side to the inert partial pressure in control mode.

6. Method according to one of the preceding claims, **characterized in that**, in step b), the flowing current is measured on a time-dependent basis.

7. Method according to Claim 6, **characterized in that** step d) is carried out after the current goes below a threshold in step b).

8. Method for detecting a defect while carrying out the method according to either of Claims 6 and 7, **characterized in that** the time dependence of the current measured in step b) is evaluated and the limiting current approached by the measured current is determined, a differentiation being made between two cell states:
A) The limiting current goes below a value of at most 10 µA, preferably of 1 µA, particularly preferably of 0.1 µA, and the closed-loop fuel cell is assessed as intact and the method for starting up a closed-loop fuel cell is continued;
B) The limiting current goes above a value of 10 µA, the closed-loop fuel cell is assessed as defective and the method for starting up a closed-loop fuel cell is ended.

## Revendications

1. Procédé pour démarrer une pile à combustible à circuit, le procédé comprenant les étapes suivantes :
a) sélection d'une pile à combustible à circuit, la pile à combustible à circuit se trouvant à l'état de repos,
b) application d'une tension entre le côté hydrogène et le côté oxygène, l'électrode du côté oxygène étant polarisée positivement,
c) mesure du courant qui circule entre l'électrode du côté oxygène et l'électrode du côté hydrogène,
d) fin de l'application d'une tension entre le côté hydrogène et le côté oxygène,
f) acheminement d'oxygène vers le côté oxygène.

2. Procédé selon la revendication 1, **caractérisé en ce qu'**à l'état de repos de la pile à combustible à circuit, un gaz inerte ayant moins de 1 % volumique d'oxygène, de préférence moins de 10 ppm d'oxygène, est présent du côté oxygène.

3. Procédé selon l'une des revendications précédentes, **caractérisé en ce qu'**à l'étape b), une tension entre 0,1 V et 1V, de préférence entre 0,2 V et 0,8 V, notamment de préférence entre 0,25 V et 0,4 V est appliquée.

4. Procédé selon l'une des revendications précédentes, **caractérisé en ce qu'**aux étapes b) à d), le côté hydrogène est continuellement rincé avec de l'hydrogène ou un mélange d'hydrogène et de gaz inerte.

5. Procédé selon l'une des revendications précédentes, **caractérisé en ce qu'**entre l'étape d) et l'étape f), le procédé comprend l'étape suivante :
e) réduction de la pression partielle inerte du côté oxygène à la pression partielle inerte en régime de régulation.

6. Procédé selon l'une des revendications précédentes, **caractérisé en ce qu'**à l'étape b), le courant qui circule est mesuré en fonction du temps.

7. Procédé selon la revendication 6, **caractérisé en ce que** l'étape d) est exécutée après le franchissement vers le bas d'un seuil de courant à l'étape b).

8. Procédé de détection d'un défaut pendant la mise en œuvre du procédé selon l'une des revendications 6 à 7, **caractérisé en ce que** la dépendance au temps du courant mesuré à l'étape b) est interprétée et le courant limite duquel se rapproche le courant mesuré est déterminé, deux états de la pile étant différenciés :
A) le courant limite devient inférieur à une valeur maximale de 10 µA, de préférence de 1 µA, notamment de préférence de 0,1 µA, et la pile à combustible à circuit est évaluée comme étant intacte et le procédé pour démarrer une pile à combustible à circuit est poursuivi ;
B) le courant limite devient supérieur à une valeur de 10 µA, la pile à combustible à circuit est évaluée comme étant défectueuse et le procédé pour démarrer une pile à combustible à circuit prend fin.
